# EUROPEAN PATENT APPLICATION

(11) **EP 1 324 224 A1**
(43) Date of publication of application: **02.07.2003**
(21) Application number: 02028138.2
(22) Date of filing: 18.12.2002
(51) Int. Cl.: G06F 17/30

(54) **Method and system for retrieving ornithological information**

(30) Priority: 18.12.2001 US 23546
(71) Applicant: Swarovski Optik KG, 6067 Absam i. Tirol (AT)
(72) Inventor: Swarovski, Daniel, 6111 Volders (AT)
(74) Representative: Kador & Partner

(57) **Abstract**

The invention relates to a method and a system for watching and tracking of birds in their natural habitats, in particular to a method and a system for supporting bird watchers in watching and tracking birds by providing the bird watcher in open field interactively with information on all concerns of his activity.

The inventive method comprises
a) carrying out a bird watching activity in a natural bird habitat;
b) carrying a portable device comprising means for entering and displaying data and means for wireless data sending and reception;
c) entering a data set (1) related to said bird watching activity of step a) into said portable device;
d) transmitting said data set (1) from said portable device to a base platform;
e) processing said data set (1) in the base platform and obtaining a data set (2) as a result of said processing;
f) transmitting said data set (2) from the base platform to said portable device;
g) displaying the information contained in said data set (2) on said portable device.

The inventive system comprises a portable device with a display, means for entering data and means for wireless data sending and reception, and a base platform with means for data exchange with said portable device and means for processing of data related to a bird watching activity, wherein a data set (1) related to a bird watching activity is transmitted from said portable device to said base platform, is processed therein, and a data set (2) is obtained as a result of said processing and said data set (2) is transmitted to said portable device on which the information contained in data set (2) is displayed.

## Description

### TECHNICAL FIELD

The present invention relates to a method and a system for watching and tracking of birds in their natural habitats, in particular to a method and a system for supporting bird watchers in watching and tracking birds by providing the bird watcher in open field interactively with information on all concerns of his activity.

### BACKGROUND OF THE INVENTION

The watching of birds in open country is a leisure time activity in which a growing number of people particularly in industrial countries are interested. As bird watching is exercised in natural habitats of birds the bird watcher usually does not have direct access to information e.g. related to identification of (observed) birds or the position of other bird watchers in the same natural habitat. It is thus desirable to provide a method enabling the bird watcher to receive information on all concerns of his activity on the spot.

Meanwhile, about 4,500 different species of birds are known. These species often are difficult to discern from each other, especially for bird watchers who are not trained ornithologists. It is thus further desirable to provide the bird watcher on the spot with information on birds and bird species the bird watcher is actually watching or is interested in, for example, for tracking them.

A further aim of bird watchers is to watch as much different bird species as possible. It is thus also desirable to provide bird watchers while he is carrying out his bird watching activity with information on the current whereabouts of different bird species or with information on current migration and estimated future whereabouts of specimen of a desired bird species so that the bird watcher is enabled to move to the current or future whereabouts of the desired bird species.

Moreover, as bird watching often takes place in areas which are hardly accessible and often not mapped in detail, it is desirable to provide the bird watcher with information on the geographic location where he is staying comprising for example information on the weather situation or best routes to a location the bird watcher is planning to go.

It is also of interest for the bird watcher to establish contact with other bird watchers who at the same time are observing birds in the same local area for e.g. exchange of information with them. Thus, it is also desirable to enable such a contact and information exchange.

### SUMMARY OF THE INVENTION

The present invention is based on the finding that the above objects can be achieved by providing a method and a system for watching and tracking of birds comprising a portable device which is carried by the bird watcher while carrying out his activity which allows for an interactive exchange of data with a base platform in which data received form the bird watcher are processed and sent back to the bird watcher.

The present invention therefore provides a method for watching and tracking birds which comprises carrying out a bird watching activity in natural bird habitat, carrying a portable device comprising means for entering and displaying data and means for wireless data sending and reception, entering a data set (1) related to said bird watching activity into said portable device, transmitting said data set (1) from said portable device to a base platform, processing said data set (1) in the base platform and obtaining a data set (2) as a result of said processing, transmitting said data set (2) from the base platform to said portable device and displaying said data set (2) on said portable device.

Furthermore, the present invention provides a system for watching and tracking of birds in a natural habitat which comprises a portable device with a display, means for entering data and means for wireless data sending and reception, and a base platform with means for data exchange with said portable device and means for processing of data related to a bird watching activity, wherein a data set (1) related to a bird watching activity is transmitted from said portable device to said base platform, is processed in said base platform and a data set (2) is obtained as a result of said processing and said data set (2) is retransmitted to the portable device on which the information contained in data set (2) is displayed.

The term "bird watching activity" is intended to cover all kinds of activities a bird watcher may carry out in a natural bird habitat which help him to watch and/or track birds in their natural habitat. This includes, for example, the identification of observed birds, the determination of current whereabouts and/or migration of birds etc.

It is an advantage of the inventive method and system that a bird watcher can be supplied at any time at any location in a natural bird habitat with information which he needs to exercise his activity directly on the spot. Thus, the bird watcher is enabled to exercise his activity more effectively and safely.

For example, the bird watcher by the inventive method may be supplied with information on a bird he is observing so that he can decide whether the bird belongs to a bird species which he has already watched or not. Further, the bird watcher may receive information on the current position of specimen of a particular bird species he is interested in, or on current migration of such a specimen and future whereabouts of said specimen. Thus, he is able to plan his route accordingly. He may also receive information on the current weather situation in the area where he is observing birds and for example be warned if bad weather is arising.

The inventive method and system comprise as preferred embodiments such described below.

### BRIEF DESCRIPTION OF THE DRAWINGS

FIG. 1 is a schematic diagram showing an embodiment of the inventive system and the possible data exchange pathways.
FIG. 2 is a flow chart illustrating the data flow in an embodiment of the method and system according to the present invention.

### DETAILED DESCRIPTION

In a first embodiment of the invention a method is provided for watching and tracking birds which comprises carrying out a bird watching activity in a natural bird habitat, carrying a portable device comprising a display, means for entering data and means for wireless data sending and reception, entering a query concerning the nature of a bird into the portable device, transmitting said query to a base platform, processing said query in the base platform and obtaining a response to the query, transmitting said response from the base platform to said portable device and displaying said response on the display of said portable device.

Preferably, the query concerning the nature of a bird comprises a query concerning the identification of the species to which a bird the bird watcher is interested in, e.g. because he is currently observing it, belongs and the response accordingly comprises information on the species of said bird.

This embodiment of the inventive method provides the bird watcher on the spot with information on the nature of a bird, particularly the species of a bird, he is currently observing or of a bird he is interested in. The term "nature of a bird" is intended to designate all possible information on a bird such as its species, its natural habits, the location of its natural habitats, its flight behaviour etc.

Thus, for example, the bird watcher is able to decide on the spot whether he further wants to observe this particular bird and e.g. take photographs of the bird, or whether he tries to track a bird specimen of another species.

The query of the bird watcher may comprise all kinds of descriptive information of the bird as e.g. size, colour, gesture, flight behaviour, kind of feathers etc. which may serve to identify the species of the bird. Further, the query may also comprise image material of the bird in electronic form as e.g. obtained from photographing or filming the bird with a digital camera and/or sound material in electronic form obtained from recording the song of the bird.

Processing of the query by the base platform may be either be done automatically by a computer by use of an expert system which upon reception of information on a bird is able to determine the species of the bird or a list of possible species. It is also possible that the base platform comprises an ornithologist who processes the query by determining a bird species or a list of possible bird species from the information on the bird received in the base platform. For carrying out said processing the base platform may retrieve data such as bird lists from a data base stored in the base platform and/or from external data bases e.g. available from the internet or libraries.

The response retransmitted to the portable device may also comprise image material and/or sound or other material which may serve to further illustrate the result.

In a further embodiment the invention provides a method for watching and tracking birds which comprises observing birds in a natural habitat, carrying a portable device comprising means for entering and displaying data and means for wireless data sending and reception, entering a query on the species of an observed bird into the portable device, transmitting said query together with a sound recording of the bird song of said bird from said portable device to a base platform, processing said query in the base platform comprising comparing the recorded bird song with known bird songs classified according to the bird species and obtaining as a result of said processing information on the species of the observed bird, transmitting said result as a response from the base platform to said portable device and displaying said response on said portable device.

This embodiment of the inventive method provides the bird watcher on the spot with information to which species an observed bird belongs by using the fact that each bird species has a characteristic song by which it can be distinguished from other species. Recording of the song of an observed bird may e.g. be performed by a directional microphone.

Preferably, the bird song is recorded with a sound recorder in a digital form so that the data obtained by the sound recorder can directly be transmitted to the portable device e.g. by using the blue tooth data exchange standard. It is also possible that the portable device comprises a sound recorder so that the portable device may directly access the sound recording.

After reception of the query and the song data in the base platform, the species of the bird is determined by comparing the recorded song with a list of known bird songs classified according to the bird species singing the song.

Preferably, the comparison of the recorded song with known songs is performed via a frequency analysis of these songs, e.g. by a Fourier frequency analysis of the songs and a comparison of the determined Fourier coefficients of the different frequencies. Further preferred, the frequency analysis is carried out automatically by a computer.

The response retransmitted to the portable device may comprise image material and/or sound or other material which may serve to further illustrate the determined species.

In a further embodiment the invention provides a method for watching and tracking birds, comprising observing birds in a natural habitat, carrying a portable device comprising means for entering and displaying data and means for wireless data sending and reception, entering a query on the species of an observed bird into the portable device, transmitting said query together with digital image material of said bird from said portable device to a base platform, processing said query in the base platform comprising analysing the image material and obtaining as a result of said processing information on the species of the observed bird, transmitting said result as a response from the base platform to said portable device and displaying said response on said portable device.

This embodiment of the inventive method provides the bird watcher on the spot with information to which species an observed bird belongs by using image material of the observed bird. This image material may comprise photographs of the bird obtained e.g. by photographing the observed bird using a magnifying device such as a zoom lens or a telescope. Photographs may also be taken using a night vision device. Further, image material may also comprise motion pictures recorded e.g. by a film camera using a magnifying device.

Preferably, the photographic or film camera provides images in a digital form so that the data obtained by the camera can directly be transmitted to the portable device e.g. by using the bluetooth data exchange standard. It is also possible that the camera is directly connected to the portable device e.g. by a cable so that the portable device may directly access the image material.

After reception of the query and the image material in the base platform, the species of the bird is determined by analysing the image(s) of the observed birds. Preferably, this is performed automatically with a computer using an image analysis program which e.g. recognises and extracts the image of the observed bird from the image material and determines the species of the bird by comparing the extracted images of the bird with a list of images of bird species. The program may also use the silhouette of the bird as determined form the image material and compare it with a list of bird silhouettes classified according to the bird species.

The response retransmitted to the portable device may comprise image material and/or sound or other material which may serve to further illustrate the determined species.

In a further embodiment the invention provides a method for watching and tracking birds which comprises observing birds in a natural habitat, carrying a portable device comprising means for entering and displaying data and means for wireless data sending and reception, entering a query on the species of an observed bird into the portable device, transmitting said query together with digital motion picture material of said bird from said portable device to a base platform, processing said query in the base platform comprising analysing the flight characteristics of the bird from the motion picture material and obtaining as a result of said processing information on the species of the observed bird, transmitting said result as a response from the base platform to said transmitting said query from said portable device to a base platform and displaying said response on said portable device.

This embodiment of the inventive method provides the bird watcher on the spot with information to which species an observed bird belongs by using motion picture material of the observed bird. This motion pictures may be taken by the bird watcher by using a film camera with a magnifying device such as a zoom lens or a telescope and/or with a night vision device.

Preferably, the film camera provides images in a digital form so that the data obtained by the camera can directly be transmitted to the portable device e.g. by using the bluetooth data exchange standard. It is also possible that the camera is directly connected to the portable device e.g. by a cable so that the portable device may directly access the motion picture material.

After reception of the query and the motion picture material in the base platform, the species of the bird is determined by analysing the flight characteristics of the observed bird e.g. by extracting the flight path of the bird from the motion pictures, modelling it as a mathematical function and comparing the determined function with flight path functions of birds classified according to their species.

Preferably, the analysis of the flight characteristics is performed automatically with a computer.

The response retransmitted to the portable device may comprise image material and/or sound or other material which may serve to further illustrate the determined species.

In a further embodiment the invention provides a method for watching and tracking birds which comprises carrying out a bird watching activity in a natural bird habitat, carrying a portable device comprising means for entering and displaying data and means for wireless data sending and reception, entering a query concerning the current whereabouts of a specimen of a bird species, transmitting said query from said portable device to a base platform, processing said query in the base platform and obtaining a response to the query, preferably comprising information on the position of a specimen of said bird species, preferably in the local area of the bird watcher, transmitting said response from the base platform to said portable device and displaying said response on said portable device.

This embodiment of the inventive method provides the bird watcher on the spot with information on the present geographic position of a specimen of a bird species he is interested in so that he is able to move to this position and observe the bird there. Preferably, the position information comprises information on such bird specimens with positions which are within the local area of the bird watcher so that he is able to reach these locations in reasonable time. The bird watcher, in case, may of course also be informed that in his local area no specimen of a desired bird species are present.

Processing of the query by the base platform is preferably done automatically by a computer which accesses a data base in which updated lists of positions of specimens of all kinds of bird species are contained. Such a data base for example can be built up and be updated by information transmitted to the base platform by other bird watchers or by information from professional ornithologists. It is also possible that the base platform comprises a person who is administrating such a data base and who processes the query.

The response retransmitted to the portable device may also comprise information on the time at which the position of the bird specimen has been determined.

Further, the response may also comprise local maps which may serve the bird watcher for orientation and for planning his route.

Preferably, in this embodiment the position data of the bird specimen(s) of interest are shown on a local map displayed on the portable device.

Further, preferably this embodiment of the inventive method comprises displaying a suggested route for reaching the position of a specimen of the desired bird species.

In a further embodiment the invention provides a method for watching and tracking birds which comprises carrying out a bird watching activity in a natural bird habitat, carrying a portable device comprising means for entering and displaying data and means for wireless data sending and reception, entering a query concerning current migration and/or future whereabouts of a specimen of a bird species to be observed into the portable device, transmitting said query from said portable device to a base platform, processing said query in the base platform and obtaining a response to the query, preferably comprising information on the position and the direction of current migration of a specimen of said bird species and/or future position of said specimen of said bird species, transmitting said response from the base platform to said portable device and displaying said response on the display of said portable device.

This embodiment of the inventive method provides the bird watcher on the spot with information on present position and the migration behaviour of a specimen or a flock of a bird species and/or future positions of a specimen or a flock of birds of a species he is interested in. Thus, the bird watcher is enabled to move to this location and observe the specimen of the bird species and their migration there.

Preferably, the information comprises information on such specimen(s) which are located within the local area of the bird watcher so that he is able to reach these locations in reasonable time. The bird watcher, in case, may of course also be informed that in his local area no specimen of a desired bird species are present.

Processing of the query by the base platform may be either be done automatically by a computer which may access a data base in which updated lists of positions and directions of migration of specimen of all kind of bird species are contained. The information on future positions of the specimen may be estimated from these data.

Such a data base for example can be built up and be updated by information transmitted to the base platform by other bird watchers or professional ornithologists. It is also possible that the base platform comprises a person, e.g an ornithologis, who is administrating such a data base and who processes the query and estimates the future locations of the bird specimen according to his personal skill.

The response transmitted to the portable device may also comprise image material and/or sound or other material which may serve to further illustrate the result. In particular, the result may comprise local maps which serve the bird watcher for orientation and for planning his route.

Preferably, the position data, the data on current migration and/or the data on future whereabouts of a specimen of the desired bird species are shown on a local map displayed on the portable device.

Further preferred, a suggested route for reaching the the position of current migration and/or of future whereabouts of the specimen of the bird species are displayed on the portable device

In a further embodiment the invention provides a method for watching and tracking birds which comprises carrying out a bird watching activity in a natural bird habitat by two or more bird watchers, each bird watcher carrying a portable device comprising means for entering and displaying data and means for wireless data sending and reception, transmitting information by at least a first and a second bird watcher in which local area he is carrying out said bird watching activity from the portable device of said bird watchers to a base platform, entering a query concerning the location of further bird watchers into said portable device by said first bird watcher, transmitting said query from said portable device to said base platform, processing said query in the base platform and obtaining a list of further bird watchers who are carrying out a bird watching activity in the same local area as the first bird watcher as a result of said processing, transmitting said list as a response from the base platform to the portable device of said first bird watcher and displaying said response on the display of said portable device of said first bird watcher.

This embodiment of the inventive method enables bird watchers to receive information on further bird watchers which at the same time are exercising their activity in the same local area. Usually, local area will designate the area the bird watcher is able to reach within a reasonable time e.g. within at most one day. Local area may also designate the area of the natural bird habit as e.g. a natural park or a nature reserve. The bird watcher is thus enabled to contact other bird watchers in the same local area and exchange information of interest for their activity as e.g. current positions of specimen of a particular bird species.

In the base platform the information on the local area of the bird watchers is stored and administrated in a data base.

Processing of the query by the base platform is preferably done automatically by a computer which has access to said data base in which (updated) lists of bird watchers and the local area in which they are carrying out their activity are contained. As a response, a list of bird watchers carrying out a bird watching activity in the same local area as the first bird watcher is obtained.

This response is transmitted to the portable device of said first bird watcher and is displayed thereon. The response may also comprise further information serving to illustrate the response e.g. local maps on which the borderlines of the local area which has been considered by the base platform during processing of the query are shown.

The response may also comprise information on how the first bird watcher may contact further bird watchers carrying out their activity in the same local area.

Preferably, in this embodiment of the inventive method said transmitting of information by the bird watchers in which local area he is carrying out his activity comprises transmitting information on the position of said bird watchers from the portable devices to the base platform and processing of said query comprises obtaining a list of the positions of further bird watchers in the same local area as the first bird watcher.

The position information may for example be obtained by a Global Positioning System (GPS) which is connected to or integrated in the portable device. This information may either be stored in the portable device before being transmitted to the base platform or be directly sent. In the base platform the information on the positions of the bird watchers is stored, preferably updated, and administrated in a data base.

Further preferred, the information on the position of the other bird watchers is shown on the display of the first bird watcher on a local map.

Preferably, the inventive method comprises entering a data set (1) related to a bird watching activity into the portable device by said first bird watcher, transmitting said data set (1) from the portable device of said first bird watcher to the portable device of said second bird watcher and displaying the information contained in said data set (1) on the display of said portable device.

This embodiment enables the bird watcher to send information on all kinds of bird watching concerns to other bird watchers in the same local area.

Further preferred, the method comprises entering a data set (2) in response to said data set (1) into the portable device by said second bird watcher, transmitting a data set (2) from the portable device to the portable device of said first bird watcher and displaying the information contained in said data set (1) on said portable device.

This embodiment enables the bird watchers in the same local area to exchange data concerning all kinds of information which is of interest for their bird watching activity on the spot.

Preferably, transmission of said data sets (1) or (2) from a first portable device to a second comprises the steps of sending the data set from a first portable device to said base platform, processing said data so that as a result is obtained to which portable device said data set should be transmitted and sending said data set to the desired second portable device. In this embodiment the function of the base platform is similar to an operator which directs the data sets to be transmitted to the portable device of the bird watcher intended by the first bird watcher to receive the data set.

Preferably, in the method said data set (1) comprises a query on the nature of a bird and data set (2) comprises a response to said query, preferably comprising information on the species of said bird.

Further preferred, in the method data set (1) comprises a query on the current whereabouts of a specimen of a bird species and data set (2) comprises a response to said query, preferably comprising information on the position of a specimen of said bird species, preferably in the local area of the first bird watcher.

Further preferred, in the method data set (1) comprises a query on current migration and or future whereabouts of a specimen of a bird species and data set (2) comprises a response to said query, preferably comprising information on the position of a specimen of said bird species and the direction of current migration and/or future whereabouts of said specimen.

All above described embodiments of the inventive method preferably comprise as further preferred embodiments the features of one or more of the other above described embodiments including their preferred variants.

In the following, further preferred features of the inventive method are given which relate to all of the above described embodiments where appropriate.

The data transmitted to the base platform, e.g. a query and accompanying material, may either be stored in the portable device before being transmitted to the base platform or be directly sent.

After reception of the data by the base platform, the data may be stored in the base platform. The data, e.g. the query, are then processed by the base platform. Preferably, this is done immediately after reception of the data or within a time frame of not more than about several minutes, e.g. 30 minutes.

After processing of the data a result is obtained as e.g. a response to the query. This result is transmitted back to the portable device. Preferably, this is done immediately after the result has been obtained or within a time frame of not more than several minutes, e.g. 30 minutes.

In the embodiments where a query is to be processed by the base platform it is preferred that if the information which has been transmitted to the base platform after processing includes several response possibilities, the inventive method comprises formulation of a request for further information by the base platform and transmitting said request to the portable device of the bird watcher who sent the query and displaying said request thereon.

After displaying said request on the display of the portable device the bird watcher may enter further information if such is available for him. This information is then transmitted from the portable device to the base platform and the query is then processed therein under consideration of all previous and new information which has been provided to the base platform. After processing, the response is transmitted to the portable device where it is displayed.

This procedure may also be repeated if still further information is required by the base platform to respond to the query. It is also possible that as a response several possible results to the query, e.g. if a query concerns the nature of a bird then several possible species of the observed bird, are transmitted to the portable device.

Preferably, the base platform comprises a computer system and processing of the data/query is performed automatically e.g. by use of an expert system.

Further preferred, the inventive method comprises transmitting information in which local area the bird watcher is carrying out his activity from the portable device to the base platform.

It is an advantage of this preferred embodiment that the base platform receives information in which local area the bird watcher is exercising his activity. Hence, information of concern for bird watchers in this area such as the weather situation in the area or the position of further bird watchers with whom the first bird watcher wants to communicate can be transmitted from the base platform to the portable device and be displayed there.

The inventive method further preferably comprises transmitting information on the position of the bird watcher from said portable device to the base platform.

The information on the position of the bird watcher may be entered into the portable device by the bird watcher who for example deduces the position from local maps, a compass etc. or uses a position determining device such as a global positioning system (GPS). It is also possible that the portable device is connected to a position determining device, e.g. GPS, which transfers the data automatically or on request to the portable device. Such a position determining device, e.g. GPS, may also be integrated into the portable device.

It is an advantage of this preferred embodiment that the exact geographic position of the bird watcher is transmitted to the base platform so that information relating to such geographic position, as e.g. local maps, may be transmitted to the portable device.

Further preferred, the information on the position of the bird watcher is regularly updated and this updated information on the position of the bird watcher is transmitted from the portable device to the base platform in regular intervals.

This may e.g. automatically be carried out by a portable device with integrated GPS system from which in an interval of 30 min or one hour but also in longer intervals such as 2, 3, 5 or 10 hours, a data set containing the current position of the bird watcher carrying the device is sent to the base platform.

These position data ("way points") preferably are stored in the base platform so that e.g. the bird watcher after finishing his birding tour can be provided with information on the route of his tour.

It is further an advantage of this preferred embodiment that in the base platform always updated position data of the bird watcher are available.

Further preferred, the weather situation in the area where the bird watcher(s) is/are located is continuously recorded by the base platform and information on the current weather situation is transmitted to the portable device of each bird watcher.

The base platform may obtain information on the weather situation by receiving local weather forecasts e.g. from local meteorological facilities and/or from satellite observations. Furthermore, information on the weather situation may also be recorded by each bird watcher for the local area where he is currently located and this information may be transmitted via the portable device(s) to the base platform. The bird watcher may e.g. record the weather data with a personal outdoor assistant enabling e.g. measurements of temperature and pressure. Information on the weather situation comprises air temperature, air pressure, humidity, wind direction and speed, cloudiness, precipitation, etc., and the change of these parameters with time. Based upon the information received, the base platform transmits information on the weather situation in the particular local area where the bird watcher(s) is/are located to the portable device(s). This may e.g. be done in regular intervals. The information transmitted to the portable device includes information on all weather parameters as mentioned above as well as weather forecasts. The information may e.g. be displayed on a weather chart.

It is thus possible, for example, so that the bird watcher may plan his tour according to the present or future weather situation. It is also possible to transmit a warning message from the base platform to the portable device if the weather situation worsens, e.g. in case a thunderstorm is to be expected in the area of the bird watcher.

Preferably, the inventive method comprises transmitting information on further bird watchers in the same local area, preferably on their position, from the base platform to the portable device.

This information may be obtained by the base platform from other bird watchers using also portable devices and transmitting information on the local area, preferably on their position, in which they are carrying out their activity to the base platform.

The inventive method further preferably comprises entering a start code into said portable device upon starting the bird watching activity in natural bird habitat and transmitting said start code to the base platform.

Further preferred, in the inventive method the start code comprises information in which local area, preferably at which position, the bird watcher is carrying out his activity.

It is further preferred that in the inventive method the portable device is emitting a signal upon reception of information from the base platform.

This signal preferably is an acoustic or vibrational signal so that the bird watcher may carry the portable device in a pocket or bag and may nevertheless take notice when information from the base platform is received by the portable device.

Preferably, the inventive method comprises transmitting of the data sets exchanged between the portable device and the base platform to a home platform.

Such a home platform may e.g. be a personal computer located at the home of the bird watcher. The bird watcher in this embodiment is provided with a protocol of his bird watching tour which he may use for archiving purposes.

Further preferred, the method comprises transmitting the position information to the home platform.

Furthermore, the present invention provides a system for watching and tracking of birds in a natural habitat which comprises a portable device with a display, means for entering data and means for wireless data sending and reception, a base platform with means for data exchange with said portable device, and means for processing data related to a bird watching activity wherein a data set (1) related to a bird watching activity is transmitted from said portable device to said base platform, is processed therein and a data set (2) is obtained as a result of said processing, and said data set (2) is retransmitted to the portable device on which the information contained in said data set (2) is displayed.

Preferably, the system comprises two or more portable devices each with a display, means for entering data and means for wireless data sending and reception.

Further preferred, the portable devices(s) comprise(s) means for determining the position of the bird watcher carrying said portable device. Preferably, the portable devices(s) comprise(s) means for automatic transmission of the position of the bird watcher carrying the device from the portable device to a base platform.

The automatic transmission of the position data proceeded by an automatic determination of the position will preferably be carried out in regular intervals, such as ever hour or 30 minutes.

Further preferred, the system comprises a home platform with means for data exchange with the base platform and/or the portable device wherein data set (1) and/or data set (2) are transmitted from the portable device and/or the base platform to said home platform.

Further preferred, the means for determining of the position of the bird watcher comprise a Global Positioning System.

This GPS may be integrated in or be connected to the portable device.

Preferably, the portable device comprises means for direct data exchange with a digital camera and/or with a sound recorder.

Further preferred, the portable device comprises an electronic compass.

Preferably, data transmission in the inventive system is performed via the internet.

Further preferred, data set (1) comprises a query on the nature of a bird and data set (2) comprises a response to said query, preferably comprising information on the species of said bird.

Therefore, data set (1) comprises a query on the current whereabouts of a specimen of a bird species and data set (2) comprises a response to said query, preferably comprising information on the position of a specimen of said bird species, preferably in the local area of the bird watcher.

Data set (1) may also preferably comprise a query on current migration and or future whereabouts of a specimen of a bird species and data set (2) comprises a response to said query, preferably comprising information on the position and the direction of current migration and/or the position of future whereabouts of a specimen of said bird species.

In the inventive system processing of the query in the base platform may also comprise formulation of a request for further information and transmitting said request from the base platform to the portable device and displaying it thereon.

The inventive system preferably comprises transmitting information on the position of the bird watcher from said portable device to the base platform.

Further preferred, updated information on the position of the bird watcher is transmitted from the portable device to the base platform in regular intervals. The intervals may e.g. be 30 minutes or one hour, but also longer intervals of 2, 3, 5 or 10 hours may be chosen.

Preferably, in the inventive system information on the position of further bird watchers in the same local area is transmitted from the base platform to the portable device of a first bird watcher.

The system further preferably comprises entering a start code into said portable device upon starting the observation of birds in natural habitat and transmitting said start code to the base platform.

This start code preferably comprises information on the position of the bird watcher carrying said portable device.

In the inventive system preferably the weather in the local area where the bird watcher is located is continuously watched by the base platform and information on the current weather situation is transmitted to the portable device.

Said portable device(s) of the inventive system preferably is emitting a signal, preferably acoustic or vibrational, upon reception of information from the base platform

In the following, components of the inventive method and system are further illustrated. The illustrated components represent preferred embodiments relating to all of the above-described embodiments of the present invention.

### Portable device

The portable device used in the present invention may be especially designed for bird watching purposes or comprise a conventional hand-held device such as a mobile phone, a personal organiser (for example organisers produced by Palmtop or Handspring) or a conventional, preferably light-weight, portable PC. The conventional hand-held device may be combined with a device having means for sending and receiving data as e.g. a mobile phone, if such a device is not integrated in the hand-held device. If a PC is used, it may comprise a wireless modem for connecting to the internet.

The display of the portable device may be a black and white or a colour display, preferably an active matrix liquid crystal display. On the display, at least words are displayable, preferably also graphics (images) are displayable.

Preferably, the portable device is programmable and provided with a specifically designed software ("bird watching software") which allows the bird watcher to easily use all functions of the portable device provided by the present invention.

The bird watching software may e.g. comprise the possibility of data search, data retrieval, data entry and data administration related to data concerning any kind of bird watching activity.

Furthermore, the bird watching software may comprise a data base in which a bird list with description of characteristic features and/or image material of the birds are stored. Thus, upon observing a bird of unknown nature, the bird watcher may skim through the data base, compare the observed bird with the stored data and thus identify the bird. He may then sent information about the position and the nature of the observed bird to the base platform, where the corresponding data base is updated.

Software may either be installed in the portable device by means e.g. of read-only-memory but may also be stored in the portable device and uploaded by the bird watcher when desired or may be downloaded from the base platform or the home platform on request of the bird watcher, e.g. when starting the inventive system.

Means for entering data into the portable device may be buttons present on the device or other devices such as e.g. a foldable keyboard or a touch sensitive display where data are entered by writing on the display with a pencil.

The portable device may also comprise interfaces for the data exchange with external devices such as camera, a sound recorder etc. Preferably, data exchange is performed using the bluetooth standard.

### Base platform

The base platform comprises a computer server which is permanently connected to the internet. On this computer server information necessary for processing data sets or queries concerning a bird watching activity are stored, such as bird lists containing bird species and the description of their characteristic features, preferred bird habitats, characteristic bird behaviour, image material of bird species, bird songs of the different bird species, local area maps of natural bird habitats, preferred bird watching routes, etc. These data are updated in irregular intervals upon reception of new information, e.g. when a new bird species has been discovered.

On the server further information is stored which due to its temporary nature is updated in short regular or irregular intervals. This information comprises positions of bird specimens of different bird species within a natural habitat, information on direction of current migration of said bird specimens, information on the position of bird watchers, weather situation in the different natural bird habitats, etc. This information is also stored in databases which are updated as soon as further information is available, e.g. from bird watchers concerning the position of particular birds and/or in regular intervals, e.g. information received in regular intervals on the position of bird watchers carrying a portable device connected with a GPS.

Further, the databases on the server may be updated by external information sources, e.g. information on birds/position of birds from professional ornithologists, weather forecasts from official authorities or meteorological service, etc.

The base platform will usually comprise a person which is administrating the above described databases.

The base platform will optionally be connected to a home platform of a particular bird watcher to retrieve therefrom specific information relating to this bird watcher, as e.g. the bird species which have already been observed by this bird watcher or a list of preferred bird species which the bird watcher intends to observe.

The computer server of the base platform may also provide a homepage for the birding community in the internet which may be accessed from the general internet.

### Processing of data related to the bird watching activity

Processing of the data sets or queries received from a bird watcher in the base platform is, where possible, performed via computer software expert systems which on receipt of the data/query automatically access the relevant databases and/or further information stored in the base platform or being accessible by the base platform and automatically generate a second data set / response to the query. As an example may serve that if a query concerning the position of further bird watchers in the same local area is received the expert system will automatically access the data base in which this information is stored and will automatically select the appropriate information and generate an adequate response.

The expert system or the professional ornithologist may also send requests for further information to the portable device of the bird watcher in case the information given does not allow to answer the query.

Where more complicated queries have to be answered such as e.g. concerning the nature of birds, the base platform may also comprise a professional ornithologist which will process the query using his professional knowledge and return an adequate response.

### Data transfer

The data transfer between the portable device, the base platform and/or the home platform is carried out via the internet. The portable device will use the integrated or external device for wireless connection to an internet server which will then, usually via cable, further transfer the data to the base platform. The data transfer can hence be performed via all channels which are accessible for the internet including also data transfer via satellite.

### Home platform

The home platform usually is a computer, e.g. a personal computer, located at the home or the working place of the bird watcher. The home platform may or may not be connected to the internet. If data are to be transferred from either the portable device or the base platform to the home platform, either file transfer, in case the home platform is connected to the internet, may be used or the data may also be stored on a storage medium which is then shipped to the location of the home platform of the bird watcher. It is also possible that a data exchange between the portable device and the home platform is performed via an interface between both devices such as e.g. an infrared interface after the bird watcher has returned to his home/office.

### Further equipment

The portable device is equipped with a means for determining the position of the bird watcher carrying the device which preferably is a Global Positioning System (GPS). The GPS may already be integrated in the portable device.

Further, the portable device is equipped with a computer program and/or technical means for automatically obtaining information on the current position from the GPS and transmitting this information to the base platform.

The updated information on the position of the bird watcher may on the one hand serve the bird watcher to archivate his route by seeing exactly where he has exercised is activity and on the other hand it is also possible to provide the bird watcher with updated information related to his current position such as weather situation.

To support the orientation of the bird watcher the portable device may also be equipped with an electronic compass.

Further, a digital photograph and/or film camera may be used in the inventive method and system with which the bird watcher may take photographs or motion pictures from an observed bird. The camera should be equipped with means for direct data transfer with the portable device. For this purpose, preferably an interface for wireless data transfer according to the bluetooth standard is integrated in the camera and data are transferred from the camera to the portable device via this interface. However, also transfer via cable is possible.

Furthermore, a sound recording device such as a directional microphone may be used for recording the song of an observed bird. The data from the sound recorder may be transferred to the portable device in the same way as the digital image material from a camera.

### Example

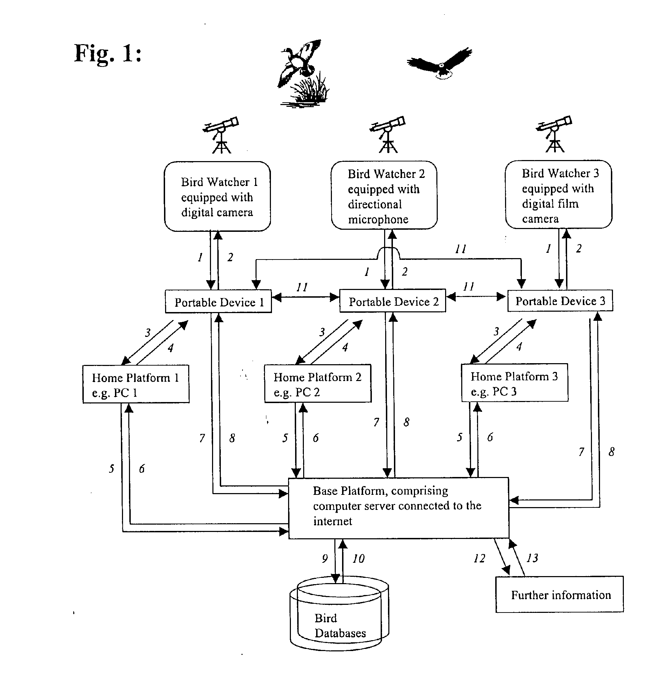

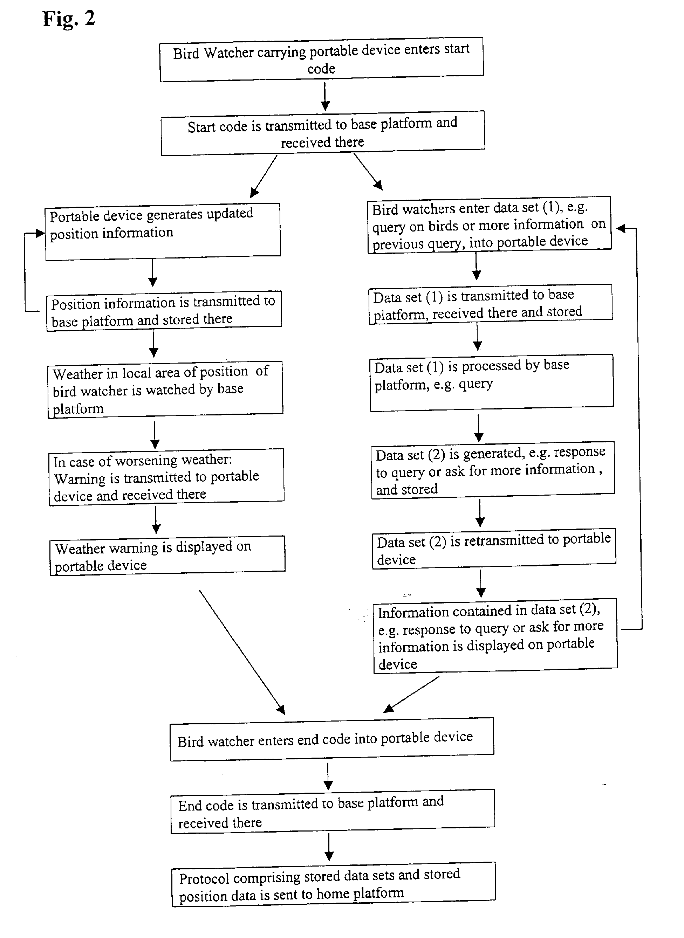

In the following, a non-limiting example of the inventive method and system will be described with reference to figures 1 and 2.

In this example three bird watchers 1, 2 and 3 are exercising their activity in the same natural bird habitat, e.g. a natural park. Each of the bird watchers is carrying a portable device 1, 2 and 3 which comprises a personal organiser with a coloured active matrix liquid crystal display, an integrated Global Positioning System and an infrared interface which for data sending and reception is connected to a mobile phone. All bird watchers on starting their activity enter (1) a start code into the portable device. Upon entering the start code into the portable device the bird watching software is uploaded in the personal organiser from an internal storage source. Further, upon entering the start code, the portable device generates information on the current position of the bird watcher automatically from the integrated GPS.

Further, upon entering the start code personal organiser connects the mobile phone which is connected to the internet. The start code and the position information is sent (7) via the internet to the computer server being part of the base platform. Upon reception of the start codes from the bird watchers the respective databases containing information on the positions of bird watchers in this particular natural habitat are automatically updated.

Bird watcher 1 is observing a bird and is interested in the species to which this bird belongs. For this purpose he formulates a query which he enters (1) into the portable device comprising information on characteristic features of the bird as e.g. size, colour, flight behaviour, etc. Upon sending the request, the mobile phone is again connected to the internet and the query is sent (7) via the internet to the computer server in the base platform. On the computer server the query is processed by an expert system which according to the given features selects a list of possible species to which the observed bird may belong from the bird species database stored on the server. Then, a response is formulated by the expert system comprising the list of possible bird species and a request for further information. This response is then sent (8) via the internet to the mobile phone which is either still connected to the internet or connected from the base platform to establish the connection to the internet before receiving the response and the response is then displayed (2) on the portable device connected to the mobile phone.

There, bird watcher 1 reads the list of possible bird species and the request for further information and decides to take a digital photograph of the bird which he subsequently sends (1, 7) to the base platform. For this purpose, the bird watcher uses a digital camera from which the image data are transferred via the infrared interface of the digital camera to the portable device. The data are then sent (1, 7) to the base platform where the digital image data are processed by an image identification system which also considers the information on the characteristic features of the bird sent beforehand. After processing, the image identification system returns the species of the observed bird. This response is then retransmitted (8) by the same way as described above to the bird watcher and displayed (2) on the portable device.

Bird watcher 2 is also observing a bird and interested in the species of this bird. He records the song of this bird with a directional microphone and the data of the bird song in digital format are transferred (1) via the infrared interface to the portable device.

The query of bird watcher 2 is sent (7) via the same way as described for bird watcher 1 to the base station where it is processed by the expert system present on the computer server. For processing a frequency analysis of the bird song is carried out and the Fourier coefficients of the different frequencies are determined. These coefficients are then compared to coefficients (9, 10) stored in a database where the coefficients of the songs of known bird species are stored. This comparison reveals the species of the observed bird which is then returned (8, 2) as a response to the portable device of bird watcher 2.

Bird watcher 3 is also observing a bird and is recording digital motion picture material with a digital camera from the flying bird. These digital data are transferred to the portable device via the infrared interface. Bird watcher 3 is then formulating a query (1) on the species of the observed bird and is sending (7) this query together with a digital motion picture material via the same way as indicated for bird watchers 1 and 2 to the computer server of the base platform. In the base platform first a mathematical description of the flight path of the filmed bird is extracted from the motion picture material by a computer program. Then, this mathematical description is compared (9, 10) with descriptions of flight paths stored in a data base for the different bird species. As a response, the species of the bird is returned from the program and sent (8, 2) as a response to bird watcher 3.

During their bird watching activity, from each of the portable devices of bird watcher 1, 2 and 3 every 30 minutes automatically a signal containing information of the current position which is obtained in the portable device from the integrated GPS is sent (7) to the base platform and the corresponding data bases are updated accordingly.

Bird watcher 1 is then interested in the position of further bird watchers in the same natural bird habitat and therefore enters a query (1) into his portable device. This query is transmitted (7) to the base station where it is processed by an expert system which automatically retrieves the relevant data from the corresponding data bases. Thus, the position as stored in the data base of bird watcher 2 and 3, and, in case of, further bird watchers in the same natural habitat are returned (8, 2) as a response to the first bird watcher. The position information is displayed on a local area map of the natural bird habitat in which the bird watchers are carrying out their activity.

Bird watcher 1 then decides to send a query concerning which bird watcher 2 is currently observing to bird watcher 2 which is first sent (7) to the base platform and from the base platform directed (8) to the portable device of bird watcher 2 and the query is displayed (1) on the portable device of bird watcher 2. Bird watcher 2 is then formulating a response to the query which is sent (7) to the base platform and directed (8) from the base platform to the portable device of bird watcher 1 and displayed (2) there.

After finishing of their bird watching activity the bird watchers entering (1) are sending (7) an end code from the portable devices to the base platform. Upon receipt of the end code in the base platform a report is generated from the updated position information where the positions (way points) are shown on a local map of the natural bird habitat for each bird watcher. This report is transmitted (6) to the home platform of each bird watcher.

During the bird watching activity of bird watchers 1, 2 and 3 the base station obtains (12, 13) updated reports on the weather situation in this natural habitat. In case the weather forecasts show that a thunderstorm will reach the natural habitat, a warning is automatically transferred (8, 2) to the portable devices of bird watchers 1, 2 and 3. Upon receipt of data from the base station the portable device is emitting an acoustic signal.

In the following clauses, preferred embodiments of the invention are described:
1. Method for watching and tracking birds comprising
   a) carrying out a bird watching activity in a natural bird habitat;
   b) carrying a portable device comprising means for entering and displaying data and means for wireless data sending and reception;
   c) entering a data set (1) related to said bird watching activity of step a) into said portable device;
   d) transmitting said data set (1) from said portable device to a base platform;
   e) processing said data set (1) in the base platform and obtaining a data set (2) as a result of said processing;
   f) transmitting said data set (2) from the base platform to said portable device;
   g) displaying the information contained in said data set (2) on said portable device.
2. Method according to clause 1 wherein data set (1) comprises a query on the nature of a bird and data set (2) comprises a response to said query, preferably comprising information on the species of said bird.
3. Method according to clause 1 wherein data set (1) comprises a query on the current whereabouts of a specimen of a bird species and data set (2) comprises a response to said query, preferably comprising information on the position of a specimen of said bird species, preferably in the local area of the bird watcher.
4. Method according to clause 1 wherein data set (1) comprises a query on current migration and/or future whereabouts of a specimen of a bird species and data set (2) comprises a response to said query, preferably comprising information on the position of a specimen of said bird species and/or the direction of current migration and/or on future whereabouts of said specimen.
5. Method according to clause 1 comprising transmitting the information in which local area the bird watcher is carrying out his bird watching activity of step a) from said portable device to the base platform.
6. Method according to clause 1 comprising transmitting the information at which position the bird watcher is carrying out his bird watching activity of step a) from said portable device to the base platform.
7. Method according to clause 6 comprising transmitting updated information on the position of the bird watcher from the portable device to the base platform in regular intervals.
8. Method according to clause 1 comprising transmitting information on further bird watchers who are carrying out a bird watching activity in the same local area as the first bird watcher from the base platform to the portable device.
9. Method according to clause 1 comprising transmitting a start signal from the portable device to the base platform upon starting the bird watching activity of step a) in the natural bird habitat.
10. Method according to clause 9 wherein the start code comprises the information in which local area the bird watcher is carrying out his bird watching activity of step a).
11. Method according to clause 5 comprising transmitting information on the current weather situation in the local area where the bird watcher is carrying out his activity from the base platform to the portable device.
12. Method according to clause 1 comprising transmitting said data sets to a home platform.
13. Method according to clause 6 comprising transmitting said position information to a home platform.
14. Method for watching and tracking birds, comprising
   a) carrying out a bird watching activity in a natural bird habitat;
   b) carrying a portable device comprising means for entering and displaying data and means for wireless data sending and reception;
   c) entering a query concerning the nature of a bird into the portable device;
   d) transmitting said query from said portable device to a base platform;
   e) processing said query in the base platform and obtaining a response to said query;
   f) transmitting said response from the base platform to said portable device;
   g) displaying said response on said portable device.
15. Method according to clause 14 wherein said query concerning the nature of a bird comprises a query concerning the identification of the species of said bird and the response comprises information on the species of said bird.
16. Method according to clause 14 wherein said response to said query comprises a request for further information and the method further comprises entering the requested information into the portable device after the response has been displayed, transmitting said information to the base platform, processing said information in the base platform and obtaining a second response to said query under consideration of said information, transmitting said second response to the portable device and displaying it on the portable device.
17. Method for watching and tracking birds, comprising
   a) carrying out a bird watching activity in a natural bird habitat;
   b) carrying a portable device comprising means for entering and displaying data and means for wireless data sending and reception;
   c) entering a query concerning the nature of a bird into the portable device;
   d) transmitting said query from said portable device to a base platform;
   e) processing said query in the base platform and obtaining a response to said query;
   f) transmitting said response from the base platform to said portable device;
   g) displaying said response on said portable device.
18. Method according to clause 17 wherein said comparison of step e) is performed via a frequency analysis of the bird songs.
19. Method according to clause 18 wherein step e) is carried out automatically by a computer.
20. Method for watching and tracking birds, comprising
   a) observing birds in a natural habitat;
   b) carrying a portable device comprising means for entering and displaying data and means for wireless data sending and reception;
   c) entering a query on the species of an observed bird into the portable device;
   d) transmitting said query together with digital image material of said bird from said portable device to a base platform;
   e) processing said query in the base platform comprising analysing the image material and obtaining as a result of said processing information on the species of the observed bird;
   f) transmitting said result as a response from the base platform to said portable device;
   g) displaying said response on said portable device.
21. Method according to clause 20 wherein step e) is carried out automatically by a computer comprising an image analysis program.
22. Method for watching and tracking birds, comprising
   a) observing birds in a natural habitat;
   b) carrying a portable device comprising means for entering and displaying data and means for wireless data sending and reception;
   c) entering a query on the species of an observed bird into the portable device;
   d) transmitting said query together with digital motion picture material of said bird from said portable device to a base platform;
   e) processing said query in the base platform comprising analysing the flight characteristics of the bird from the motion picture material and obtaining as a result of said processing information on the species of the observed bird;
   f) transmitting said result as a response from the base platform to said transmitting said query from said portable device to a base platform;
   g) displaying said response on said portable device.
23. Method according to clause 22 wherein step e) is carried out automatically by a computer which extracts the flight characteristics of said bird from the motion picture material and compares it with a list of known flight characteristics of bird species.
24. Method for watching and tracking birds, comprising
   a) carrying out a bird watching activity in a natural bird habitat;
   b) carrying a portable device comprising means for entering and displaying data and means for wireless data sending and reception;
   c) entering a query concerning the current whereabouts of a specimen of a bird species;
   d) transmitting said query from said portable device to a base platform;
   e) processing said query in the base platform and obtaining a response to the query, preferably comprising information on the position of a specimen of said bird species, preferably in the local area of the bird watcher;
   f) transmitting said response from the base platform to said portable device;
   g) displaying said response on said portable device.
25. Method according to clause 24 comprising displaying of the position data of the specimen of said bird species on a local map.
26. Method according to clause 24 comprising displaying a suggested route for reaching the position of said specimen of the bird species.
27. Method for watching and tracking birds, comprising
   a) carrying out a bird watching activity in a natural bird habitat;
   b) carrying a portable device comprising means for entering and displaying data and means for wireless data sending and reception;
   c) entering a query concerning current migration and/or future whereabouts of a specimen of a bird species to be observed into the portable device;
   d) transmitting said query from said portable device to a base platform;
   e) processing said query in the base platform and obtaining a response to said query, preferably comprising information on the position and on the direction of current migration and/or on future position of a specimen of said bird species;
   f) transmitting said response from the base platform to said portable device;
   g) displaying said response on the display of said portable device.
28. Method according to clause 27 comprising displaying said information of step e) on a local map on the display of the portable device.
29. Method according to clause 27 comprising displaying a suggested route for reaching said position and/or the future whereabouts position of the specimen of the bird species.
30. Method for watching and tracking birds comprising
   a) carrying out a bird watching activity in a natural bird habitat by two or more bird watchers;
   b) each bird watcher carrying a portable device comprising means for entering and displaying data and means for wireless data sending and reception;
   c) transmitting information by at least a first and a second bird watcher in which local area he is carrying out his bird watching activity of step a) from the portable devices of said bird watchers to a base platform;
   d) entering a query concerning the location of further bird watchers into said portable device by said first bird watcher;
   e) transmitting said query from said portable device to said base platform;
   f) processing said query in the base platform and obtaining a list of further bird watchers who are carrying out a bird watching activity in the same local area as the first bird watcher as a result of said processing;
   g) transmitting said list as a response from the base platform to the portable device of said first bird watcher;
   h) displaying said response on the display of said portable device of said first bird watcher.
31. Method according to clause 30 wherein step c) comprises transmitting information on the position of said bird watchers from the portable devices to said base platform and step f) comprises obtaining a list of the positions further bird watchers in the same local area as the first bird watcher
32. Method according to clause 31 wherein step h) comprises showing the positions of said further bird watchers on a local map on the display of said portable device of said first bird watcher.
33. Method according to clause 30 comprising entering a data set (1) related to a bird watching activity into the portable device by said first bird watcher, transmitting said data set (1) from the portable device of said first bird watcher to the portable device of said second bird watcher and displaying the information contained in said data set (1) on the display of said portable device.
34. Method according to clause 33 comprising entering a data set (2) in response to said data set (1) into the portable device by said second bird watcher, transmitting a data set (2) from the portable device to the portable device of said first bird watcher and displaying the information contained in said data set (1) on said portable device.
35. Method according to clause 34 wherein said data set (1) comprises a query on the nature of a bird and data set (2) comprises a response to said query, preferably comprising information on the species of said bird.
36. Method according to clause 34 wherein data set (1) comprises a query on the current whereabouts of a specimen of a bird species and data set (2) comprises a response to said query, preferably comprising information on the position of a specimen of said bird species, preferably in the local area of the first bird watcher.
37. Method according to clause 34 wherein data set (1) comprises a query on current migration and/or future whereabouts of a specimen of a bird species and data set (2) comprises a response to said query, preferably comprising information on the position of a specimen of said bird species and/or the direction of current migration and/or future whereabouts of said specimen.
38. Method according to clause 30 comprising transmitting updated information on the position of said first bird watcher from the portable device to the base platform in regular intervals.
39. Method according to clause 30 comprising transmitting a start signal from the portable devices of said bird watchers to the base platform upon starting the bird watching activity of step a) in the natural bird habitat.
40. Method according to clause 39 wherein the start code comprises the information in which local area the bird watcher is carrying out his bird watching activity of step a).
41. Method according to clause 30 comprising transmitting information on the current weather situation in the local area where said first bird watcher is carrying out his activity from the base platform to the portable device of said first bird watcher.
42. Method according to clause 34 wherein the portable device of said second or first bird watcher is emitting a signal, preferably an acoustic or vibrational signal, upon reception of information from the portable device of said first or second bird watcher, respectively.
43. Method according to clause 34 comprising transmitting said data set (1) and/or data set (2) to a home platform of said first and/or said second bird watcher.
44. Method according to clause 38 comprising transmitting said position information to a home platform.
45. System for watching and tracking of birds in a natural habitat comprising a portable device with a display, means for entering data and means for wireless data sending and reception, and a base platform with means for data exchange with said portable device and means for processing of data related to a bird watching activity, wherein a data set (1) related to a bird watching activity is transmitted from said portable device to said base platform, is processed therein, and a data set (2) is obtained as a result of said processing and said data set (2) is transmitted to said portable device on which the information contained in data set (2) is displayed.
46. System according to clause 45 comprising two or more portable devices each with a display, means for entering data, means for wireless data sending and reception, means for determining the position of the bird watcher carrying said portable device and means for automatic transmission of the position data from the portable device to said base platform.
47. System according to clause 45 comprising a home platform with means for data exchange with the base platform and/or the portable device wherein data set (1) and/or data set (2) are transmitted from the portable device and/or the base platform to said home platform.
48. System according to clause 45 wherein the portable device comprises means for determining the position of the bird watcher carrying the device.
49. System according to clause 48 wherein the portable device comprises a Global Positioning System.
50. System according to clause with a digital camera.
51. System according to clause 45 wherein the portable device comprises means for direct data exchange with a sound recorder.
52. System according to clause 45 wherein the portable device comprises an electronic compass.
53. System according to clause 45 wherein data transmission is performed via the internet.
54. System according to clause 45 wherein data set (1) comprises a query on the nature of a bird and data set (2) comprises a response to said query, preferably comprising information on the species of said bird.
55. System according to clause 45 wherein data set (1) comprises a query on the current whereabouts of a specimen of a bird species and data set (2) comprises a response to said query, preferably comprising information on the position of a specimen of said bird species, preferably in the local area of the bird watcher.
56. System according to clause 45 wherein data set (1) comprises a query on current migration and or future whereabouts of a specimen of a bird species and data set (2) comprises a response to said query, preferably comprising information on the position and the direction of current migration and/or the position of future whereabouts of a specimen of said bird species.
57. System according to clause 45 wherein processing of the query in the base platform comprises formulation of a request for further information and said request is transmitted to the portable device and displayed thereon.
58. System according to clause 45 comprising transmitting information on the position of the bird watcher from said portable device to the base platform.
59. System according to clause 58 comprising transmitting updated information on the position of the bird watcher from the portable device to the base platform in regular intervals.
60. System according to clause 45 comprising transmitting information on the position of further bird watchers in the same local area from the base platform to the portable device.
61. System according to clause 45 comprising entering a start code into said portable device upon starting the observation of birds in natural habitat and transmitting said start code to the base platform.
62. System according to clause 61 wherein the start code comprises information on the position of the bird watcher carrying said portable device.
63. System according to clause 57 wherein the weather in the local area where the bird watcher is located is continuously watched by the base platform and information on the current weather situation is transmitted to the portable device.
64. System according to clause 45 wherein said portable device is emitting a signal, preferably acoustic or vibrational, upon reception of information from the base platform.

## Claims

1. Method for watching and tracking birds comprising
a) carrying out a bird watching activity in a natural bird habitat;
b) carrying a portable device comprising means for entering and displaying data and means for wireless data sending and reception;
c) entering a data set (1) related to said bird watching activity of step a) into said portable device;
d) transmitting said data set (1) from said portable device to a base platform;
e) processing said data set (1) in the base platform and obtaining a data set (2) as a result of said processing;
f) transmitting said data set (2) from the base platform to said portable device;
g) displaying the information contained in said data set (2) on said portable device.

2. Method according to claim 1 wherein data set (1) comprises a query on the nature of a bird and data set (2) comprises a response to said query, preferably comprising information on the species of said bird.

3. Method according to claim 1 wherein data set (1) comprises a query on the current whereabouts of a specimen of a bird species and data set (2) comprises a response to said query, preferably comprising information on the position of a specimen of said bird species, preferably in the local area of the bird watcher.

4. Method for watching and tracking birds, comprising
a) carrying out a bird watching activity in a natural bird habitat;
b) carrying a portable device comprising means for entering and displaying data and means for wireless data sending and reception;
c) entering a query concerning the nature of a bird into the portable device;
d) transmitting said query from said portable device to a base platform;
e) processing said query in the base platform and obtaining a response to said query;
f) transmitting said response from the base platform to said portable device;
g) displaying said response on said portable device.

5. Method for watching and tracking birds, comprising
a) carrying out a bird watching activity in a natural bird habitat;
b) carrying a portable device comprising means for entering and displaying data and means for wireless data sending and reception;
c) entering a query concerning the nature of a bird into the portable device;
d) transmitting said query from said portable device to a base platform;
e) processing said query in the base platform and obtaining a response to said query;
f) transmitting said response from the base platform to said portable device;
g) displaying said response on said portable device.

6. Method for watching and tracking birds, comprising
a) observing birds in a natural habitat;
b) carrying a portable device comprising means for entering and displaying data and means for wireless data sending and reception;
c) entering a query on the species of an observed bird into the portable device;
d) transmitting said query together with digital image material of said bird from said portable device to a base platform;
e) processing said query in the base platform comprising analysing the image material and obtaining as a result of said processing information on the species of the observed bird;
f) transmitting said result as a response from the base platform to said portable device;
g) displaying said response on said portable device.

7. Method for watching and tracking birds, comprising
a) observing birds in a natural habitat;
b) carrying a portable device comprising means for entering and displaying data and means for wireless data sending and reception;
c) entering a query on the species of an observed bird into the portable device;
d) transmitting said query together with digital motion picture material of said bird from said portable device to a base platform;
e) processing said query in the base platform comprising analysing the flight characteristics of the bird from the motion picture material and obtaining as a result of said processing information on the species of the observed bird;
f) transmitting said result as a response from the base platform to said transmitting said query from said portable device to a base platform;
g) displaying said response on said portable device.

8. Method for watching and tracking birds, comprising
a) carrying out a bird watching activity in a natural bird habitat;
b) carrying a portable device comprising means for entering and displaying data and means for wireless data sending and reception;
c) entering a query concerning the current whereabouts of a specimen of a bird species;
d) transmitting said query from said portable device to a base platform;
e) processing said query in the base platform and obtaining a response to the query, preferably comprising information on the position of a specimen of said bird species, preferably in the local area of the bird watcher;
f) transmitting said response from the base platform to said portable device;
g) displaying said response on said portable device.

9. Method for watching and tracking birds, comprising
a) carrying out a bird watching activity in a natural bird habitat;
b) carrying a portable device comprising means for entering and displaying data and means for wireless data sending and reception;
c) entering a query concerning current migration and/or future whereabouts of a specimen of a bird species to be observed into the portable device;
d) transmitting said query from said portable device to a base platform;
e) processing said query in the base platform and obtaining a response to said query, preferably comprising information on the position and on the direction of current migration and/or on future position of a specimen of said bird species;
f) transmitting said response from the base platform to said portable device;
g) displaying said response on the display of said portable device.

10. Method for watching and tracking birds comprising
a) carrying out a bird watching activity in a natural bird habitat by two or more bird watchers;
b) each bird watcher carrying a portable device comprising means for entering and displaying data and means for wireless data sending and reception;
c) transmitting information by at least a first and a second bird watcher in which local area he is carrying out his bird watching activity of step a) from the portable devices of said bird watchers to a base platform;
d) entering a query concerning the location of further bird watchers into said portable device by said first bird watcher;
e) transmitting said query from said portable device to said base platform;
f) processing said query in the base platform and obtaining a list of further bird watchers who are carrying out a bird watching activity in the same local area as the first bird watcher as a result of said processing;
g) transmitting said list as a response from the base platform to the portable device of said first bird watcher;
h) displaying said response on the display of said portable device of said first bird watcher.

11. System for watching and tracking of birds in a natural habitat comprising a portable device with a display, means for entering data and means for wireless data sending and reception, and a base platform with means for data exchange with said portable device and means for processing of data related to a bird watching activity, wherein a data set (1) related to a bird watching activity is transmitted from said portable device to said base platform, is processed therein, and a data set (2) is obtained as a result of said processing and said data set (2) is transmitted to said portable device on which the information contained in data set (2) is displayed.
